# EUROPEAN PATENT APPLICATION

(11) **EP 4 691 257 A1**
(43) Date of publication of application: **11.02.2026**
(21) Application number: 24193903.2
(22) Date of filing: 09.08.2024
(51) Int. Cl.: A23L 2/40, A23L 2/60, A23L 2/68, A23L 27/00

(54) **BEVERAGE CONTAINING HIGH POTENCY SWEETENERS**

(71) Applicant: Red Bull GmbH, 5330 Fuschl am See (AT)
(72) Inventor: HITZFELD, Andrea, Fuschl am See (AT); HOLPER, Stefanie, Fuschl am See (AT)
(74) Representative: Metten, Karl-Heinz

(57) **Abstract**

The invention relates to a beverage containing a) sucralose, b) water, c) malic acid and d) lactic acid. The invention also relates to a beverage containing a) one or more high potency sweeteners, b) water, and c) 0,001 to 0,2 wt.-% malic acid and/or d) 0,05 to 0,6 wt.-% lactic acid. Furthermore, the invention addresses the use of lactic acid and malic acid and optionally citric acid in combination in a beverage containing high potency sweeteners for reducing or masking the sweet aftertaste or lingering effect of said high potency sweeteners or for improving the sensory profile of said beverage containing high potency sweeteners. The invention is also about the use of lactic acid and malic acid and optionally citric acid in combination in a beverage containing high potency sweeteners and at least one flavour compound for enhancing and/or prolonging the flavour impression of said flavour compound.

## Description

The present invention relates to a beverage containing one or more high potency sweeteners as well as malic acid and/or lactic acid, preferably malic acid and lactic acid, and more preferred malic acid, lactic acid and citric acid. It further relates to the use of lactic acid and malic acid and optionally citric acid in a beverage containing at least one high potency sweetener for reducing or masking the sweet aftertaste or the lingering effect caused by said high potency sweeteners or for improving the sensory profile of said beverage containing high potency sweeteners or for enhancing and/or prolonging the flavour impression of a flavour compound in said beverage.

There exist longstanding efforts to replace natural sugars in soft drinks and energy drinks by low or non-caloric natural or artificial high potency sweeteners such as rebaudiosides, monatin, thaumatin, brazzein, sucralose, cyclamate, aspartame and acesulfame. These beverages despite having a rather low calorie content are still lacking comprehensive acceptance among customers due to their sensory disadvantages. Both low- or non-caloric natural and artificial high potency sweeteners are known to cause in various degrees a bitter, licorice-like or metallic aftertaste or a blunt or dry mouthfeel. In many instances, these low- or non-caloric natural and artificial high potency sweeteners have a delayed sweetness sensation, that is, the sweetening has a significant onset time which significantly irritates the consumer.

Many attempts have been made to overcome the afore-mentioned shortcomings. For example, according to WO 2012/073121 A2 the bitter aftertaste of steviol glycosides shall be decreased or eliminated by the reduction or elimination of rebaudioside C or dulcoside A or both from stevia compositions. However, even with stevia compositions being void of rebaudioside C or dulcoside A consumers experience a slow onset and sometimes even a longer duration of the sweetness sensation.

Sweetened beverage formulations which do not exhibit a bitter aftertaste shall be obtained according to EP 2 474 240 A1 by use of rebaudioside D and an acidulant comprising at least lactic acid and one or both of tartaric acid and citric acid, and no phosphoric acid.

From WO 2011/146463 A2 it can be derived that the bitterness in an otherwise sweet composition containing steviol glycosides shall be masked by incorporating an increased amount, relative to naturally occurring compositions, of rebaudioside D.

According to WO 2008/112967 A1 the metallic aftertaste experienced with beverages containing conventional steviol glycosides may be masked by the presence of anisic acid.

And, in WO 2012/109585 A1 it is disclosed that attributes such as bitterness, sweet aftertaste and licorice flavor of steviol glycosides may be overcome by sweetening compositions comprising a blend of rebaudioside A, rebaudioside B and steviol glycosides, in particular when the ratio of rebaudioside B to total steviol glycosides in the blend ranges from 0.5 % to about 50 % and more preferably from about 5 % to about 40 %.

In view of existing solutions for low calorie beverages it is still desirable to arrive at a much improved sweetness and aroma profile, in particular in a cost-effective manner.

Accordingly, it has been an object of the present invention to provide low or non-calorie beverages which do not exhibit the disadvantages of the prior art sweetening compositions, and which in particular provide a less intensive sweetness aftertaste. It has in particular been an object of the present invention to provide beverages which have a satisfactory sweetness profile, in particular also as to the duration of perceiving sweetness, similar to sucrose.

The problems underlying the present invention have surprisingly been solved by a beverage, in particular carbonated beverage, such as an energy drink, containing a) sucralose as high potency sweetener, b) water, c) malic acid, in particular in the amount in the range of 0,001 to 0,20 wt.-%, preferably 0,005 to 0,15 wt.-%, more preferably 0,01 to 0,10 wt.-% and more in particular 0,015 to 0,05 wt.-%, based on the total weight of the beverage in each case, and d) lactic acid, in particular in the amount in the range of 0,05 to 0,60 wt.-%, preferably 0,10 to 0,50 wt.-%, more preferably 0,15 to 0,40 wt.-% and more in particular 0,20 to 0,30 wt.-%, based on the total weight of the beverage in each case.

The combined use of malic acid and lactic acid together with at least one high potency sweetener, in particular at least one artificial high potency sweetener, has been found to yield a very harmonic sensory profile, in particular in terms of sweetness perception and reduced lingering effect.

Based on the foregoing beverage composition those are particularly preferred which further comprise in a first alternative i) saccharin, in particular sodium saccharin, and cyclamate, in particular sodium cyclamate, as high potency sweeteners a), and in a second alternative ii) mogroside V as high potency sweetener a). Beverages of the present invention according to the first alternative i) and the second alternative ii) furnish particularly satisfactory results which in addition contain acesulfame, in particular acesulfame potassium, as high potency sweetener a).

According to a preferred embodiment, the beverage of the present invention comprises a) sucralose as high potency sweetener and no other high potency sweetener, b) water, c) malic acid, d) lactic acid, f) citric acid and g) erythritol.

According to further preferred embodiment, the beverage of the present invention comprises a) sucralose, saccharin, in particular sodium saccharin, and cyclamate, in particular sodium cyclamate, and optionally also acesulfame, in particular acesulfame potassium, as high potency sweeteners, b) water, c) malic acid and d) lactic acid, and even more preferred a) sucralose, saccharin, in particular sodium saccharin, and cyclamate, in particular sodium cyclamate, and optionally also acesulfame, in particular acesulfame potassium, as high potency sweeteners, b) water, c) malic acid, d) lactic acid, f) citric acid and g) erythritol. Even more preferred the beverage of the present invention outlined in this paragraph do not contain any other high potency sweetener as explicitly specified.

According to another preferred embodiment, the beverage of the present invention comprises a) sucralose and mogroside V, and preferably also acesulfame, in particular acesulfame potassium, as high potency sweeteners, b) water, c) malic acid and d) lactic acid, and even more preferred a) sucralose and mogroside V, and preferably also acesulfame, in particular acesulfame potassium, as high potency sweeteners, b) water, c) malic acid, d) lactic acid, f) citric acid and g) erythritol. Even more preferred the beverage of the present invention outlined in this paragraph do not contain any other high potency sweetener as explicitly specified.

In the aforementioned embodiments of the beverage of the present invention c) malic acid is in particular present in the beverage in an amount in the range of 0,001 to 0,20 wt.-%, preferably 0,005 to 0,15 wt.-%, more preferably 0,01 to 0,10 wt.-% and more in particular 0,015 to 0,05 wt.-%, based on the total weight of the beverage in each case, and d) lactic acid is in particular present in the beverage in an amount in the range of 0,05 to 0,60 wt.-%, preferably 0,10 to 0,50 wt.-%, more preferably 0,15 to 0,40 wt.-% and more in particular 0,20 to 0,30 wt.-%, based on the total weight of the beverage in each case.

Accordingly, the problem underlying the present invention has also been solved by a beverage containing a) sucralose, saccharin, in particular sodium saccharin, and cyclamate, in particular sodium cyclamate, as high potency sweeteners, and in particular no other high potency sweetener, b) water, c) malic acid and d) lactic acid and in particular also f) citric acid.

The problem underlying the present invention has also been solved by a beverage containing a) sucralose, saccharin, in particular sodium saccharin, cyclamate, in particular sodium cyclamate, and acesulfame, in particular acesulfame potassium, as high potency sweeteners, and in particular no other high potency sweetener, b) water, c) malic acid and d) lactic acid and in particular also f) citric acid.

The problem underlying the present invention has also been solved by a beverage containing a) sucralose, saccharin, in particular sodium saccharin, and cyclamate, in particular sodium cyclamate, as high potency sweeteners, and in particular no other high potency sweetener, b) water, c) malic acid, d) lactic acid and g) erythritol, and in particular also f) citric acid.

The problem underlying the present invention has also been solved by a beverage containing a) sucralose, saccharin, in particular sodium saccharin, cyclamate, in particular sodium cyclamate, and acesulfame, in particular acesulfame potassium, as high potency sweeteners, and in particular no other high potency sweetener, b) water, c) malic acid, d) lactic acid and g) erythritol, and in particular also f) citric acid.

The problem underlying the present invention has also been solved by a beverage containing a) sucralose, acesulfame, in particular acesulfame potassium, and mogroside V as high potency sweeteners, and in particular no other high potency sweetener, b) water, c) malic acid, and d) lactic acid, and in particular also f) citric acid.

The problem underlying the present invention has also been solved by a beverage containing a) sucralose, acesulfame, in particular acesulfame potassium, and mogroside V as high potency sweeteners, and in particular no other high potency sweetener, b) water, c) malic acid, d) lactic acid, and g) erythritol, and in particular also f) citric acid.

Furthermore, the problem underlying the present invention has also been solved by a beverage containing a) sucralose as the high potency sweetener, and in particular no other high potency sweetener, b) water, c) malic acid, d) lactic acid, and g) erythritol, and in particular also f) citric acid.

The problems underlying the present invention have surprisingly been solved by a particularly preferred beverage, which contains
a) one or more high potency sweeteners,
b) water, and
c) 0,001 to 0,20 wt.-%, preferably 0,005 to 0,15 wt.-%, more preferably 0,01 to 0,10 wt.-% and in particular 0,015 to 0,05 wt.-%, malic acid, based on the total weight of the beverage in each case, or
d) 0,05 to 0,60 wt.-%, preferably 0,10 to 0,50 wt.-%, more preferably 0,15 to 0,40 wt.-% and in particular 0,20 to 0,30 wt.-%, lactic acid, based on the total weight of the beverage in each case.

In an even more preferred embodiment, the object underlying the present invention has been solved by a beverage containing
a) one or more high potency sweeteners,
b) water, and
c) 0,001 to 0,20 wt.-%, preferably 0,005 to 0,15 wt.-%, more preferably 0,01 to 0,10 wt.-% and in particular 0,015 to 0,05 wt.-%, malic acid, based on the total weight of the beverage in each case, and
d) 0,05 to 0,60 wt.-%, preferably 0,10 to 0,50 wt.-%, more preferably 0,15 to 0,40 wt.-% and in particular 0,20 to 0,30 wt.-%, lactic acid, based on the total weight of the beverage in each case.

The beverage of the present invention can further comprise in preferred embodiments at least one flavour compound (component e)). Suitable flavour compounds are based on flavourings selected from the group consisting of fruit flavours such as citrus fruit flavours, preferably lemon flavour, herbal flavours, blossom flavours, liquorice flavours, vanilla flavours and cinnamon flavours. In particular, flavour compounds have flavourings selected from the group consisting of apple flavour, apricot flavour, Bergamot flavour, blackberry flavour, caramel flavour, cherry flavour, cinnamon flavour, citron flavour, coconut flavour, cola flavour, cranberry flavour, elderberry flavour, ginger flavour, gooseberry flavour, grape flavour, grapefruit flavour, hibiscus flavour, jasmine flavour, lavender flavour, lemon flavour, lime flavour, litchi flavour, malt flavour, mango flavour, mate flavour, melon flavour, mint flavour, orange flavour, passionfruit flavour, peach flavour, pear flavour, pineapple flavour, plum flavour, pomegranate flavour, raspberry flavour, rose flavour, starfruit flavour, strawberry flavour, vanilla flavour, and watermelon flavour.

Those beverages of the present invention are particularly preferred in which the amount of malic acid in the beverage, based on the combined weight of malic acid and lactic acid, is in the range of 2,0 to 15,0 wt.-%, preferably in the range of 4,0 to 12,0 wt.-%, more preferably in the range of 5,0 to 10,0 wt.-% and in particular in the range of 6,0 to 9,0 wt.-%. These embodiments help to balance the low- or non-caloric high potency sweeteners and furnish a more pleasant aroma profile and a reduced lingering sweetness.

The effect of lingering sweetness of low- or non-caloric high potency sweeteners can also be reduced, in particular if combined with malic acid, more in particular if combined with malic acid in the amounts as specified in the foregoing paragraph, by a beverage according to the present invention in which the amount of lactic acid in the beverage, based on the combined weight of malic acid and lactic acid, is in the range of 85,0 to 98,0 wt.-%, preferably in the range of 88,0 to 96,0 wt.-%, more preferably in the range of 90,0 to 95,0 wt.-% and in particular in the range of 91,0 to 94,0 wt.-%.

Suitable high potency sweeteners of the beverages of the present invention can be selected from the group consisting of natural high potency sweeteners, artificial high potency sweeteners and a mixture thereof. Suitable natural high potency sweeteners can be selected from the group consisting of Monk's Fruit extract, Lo Han Guo extract, Stevia extracts, in particular Stevia leaf extracts, steviol glycosides, rebaudiosides, steviosides, enzymatically produced steviol glycosides, glucosylated steviol glycosides, mogroside V, mogroside IV, monatin, glycyrrhizin, thaumatin, brazzein, monellin and mixtures thereof, while suitable artificial high potency sweeteners can be selected from the group consisting of sucralose, saccharin, in particular sodium saccharin, cyclamate, in particular sodium cyclamate, acesulfame, in particular acesulfame potassium, advantame, aspartame, neotame, neohesperidine and mixtures thereof.

High potency sweeteners, also known as high intensity sweeteners or high intense sweeteners, are compounds having many times the sweetness of sucrose. For example, acesulfame potassium is 200 times sweeter than sucrose, aspartame is about 180 to 200 times sweeter than sucrose, saccharine is about 300 to 500 times sweeter than sucrose, and sucralose is about 600 times sweeter than sucrose.

Particularly preferred beverages of the present invention further comprise citric acid (component f)). By combined use of malic acid and citric acid or lactic acid and citric acid, and in particular by the combined use of malic acid, lactic acid and citric acid the sweet aftertaste of the low- or non-caloric high potency sweeteners, i.e. the lingering sweetness effect can be very significantly reduced thereby arriving at a sweetening profile similar to beverages sweetened with sucrose. It has in particular been found that the use of the combination of the three acids lactic acid, citric acid and malic acid, in particular in the amounts specified in this description, improves the general sensory profile of beverages such as energy drinks and carbonated soft drinks.

In preferred embodiments, the beverage of the present invention comprises, in particular in addition to malic acid and lactic acid, citric acid in the range of 0,05 to 0,80 wt.-%, preferably 0,10 to 0,60 wt.-%, more preferably 0,15 to 0,40 wt.-% and in particular 0,20 to 0,30 wt.-%, based on the total weight of the beverage in each case.

The beverage of the present invention can further comprise acetic acid, fumaric acid, tartaric acid, phosphoric acid, succinic acid, cinnamic acid, maleic acid, adipic acid, glutaric acid, succinic acid, gluconic acid, glycolic acid, mandelic acid, oxalic acid or salicylic acid or mixtures thereof. However, in preferred embodiments the beverages of the present invention do not contain any other acid than malic acid and lactic acid or, preferably, no other acid than malic acid, lactic acid and citric acid.

Particularly preferred embodiments of the beverage of the present invention comprise, in particular in addition to the combination of malic acid, lactic acid and citric acid, erythritol (component g)). Erythritol is preferably present in the beverages of the present invention in an amount, based on the total weight of the beverage, in the range of 0,5 to 3,5 wt.-%, preferably in the range of 1,0 to 2,0 wt.-%.

The beverage of the present invention can further comprise glycerol, lactitol, maltitol, mannitol, sorbitol, xylitol or galactitol or mixtures thereof.

The sweet aftertaste of the low- or non-caloric high potency sweeteners, i.e. the lingering sweetness effect can in particular be reduced and a sweetening profile similar to beverages sweetened with sucrose can be obtained with beverages according to the present invention in which the amount of malic acid in the beverage, based on the combined weight of malic acid, lactic acid and citric acid, is in the range of 1,0 to 10,0 wt.-%, preferably in the range of 2,0 to 8,0 wt.-%, more preferably in the range of 2,5 to 6,0 wt.-%, and in particular in the range of 3,0 to 5,0 wt.-%, in which further the amount of lactic acid in the beverage, based on the combined weight of malic acid, lactic acid and citric acid, is in the range of 45,0 to 49,5 wt.-%, preferably in the range of 46,0 to 49,0 wt.-%, more preferably in the range of 47,0 to 48,7 wt.-% and in particular in the range of 47,5 to 48,5 wt.-%, and in which in addition the amount of citric acid in the beverage, based on the combined weight of malic acid, lactic acid and citric acid, is in the range of 45,0 to 49,5 wt.-%, preferably in the range of 46,0 to 49,0 wt.-%, more preferably in the range of 47,0 to 48,7 wt.-% and in particular in the range of 47,5 to 48,5 wt.-%.

It has also surprisingly been found that a very satisfactory taste profile can be accomplished with beverages according to the present invention which also contain rubusosides, in particular in an amount in the range of 0,0001 to 0,02 wt.-%, preferably in the range of 0,0005 to 0,01 wt.-%, more preferably in the range of 0,001 to 0,007 wt.-%, and in particular in the range of 0,0015 to 0,005 wt.-%, based on the total weight of the beverage in each case. In particular by working within the aforementioned ranges the sweetness perception of the beverages of the present invention can be increased without having to accept sensory disadvantages.

Those beverages of the present invention are preferred in terms of arriving at a less intensive sweet aftertaste and an improved general sensory profile, in particular in energy drinks and carbonated soft drinks, which contain sucralose, saccharin, in particular sodium saccharin, and cyclamate, in particular sodium cyclamate, or which contain sucralose, saccharin, in particular sodium saccharin, cyclamate, in particular sodium cyclamate, and acesulfame, in particular acesulfame potassium, or which in particular contain sucralose, saccharin, in particular sodium saccharin, cyclamate, in particular sodium cyclamate, and erythritol, or which in particular contain sucralose, saccharin, in particular sodium saccharin, cyclamate, in particular sodium cyclamate, acesulfame, in particular acesulfame potassium, and erythritol. Furthermore, those beverages of the present invention are particularly preferred in terms of arriving at a less intensive sweet aftertaste and an improved general sensory profile, in particular in energy drinks and carbonated soft drinks, which contain sucralose, saccharin, in particular sodium saccharin, and cyclamate, in particular sodium cyclamate, and no other high potency sweetener, or which contain sucralose, saccharin, in particular sodium saccharin, cyclamate, in particular sodium cyclamate, and acesulfame, in particular acesulfame potassium, and no other high potency sweetener, or which in particular contain sucralose, saccharin, in particular sodium saccharin, cyclamate, in particular sodium cyclamate, and erythritol, and no other high potency sweetener, or which in particular contain sucralose, saccharin, in particular sodium saccharin, cyclamate, in particular sodium cyclamate, acesulfame, in particular acesulfame potassium, and erythritol, and no other high potency sweetener.

In the beverages of the present invention as specified in the foregoing paragraph, the amount of sucralose in the beverage, based on the total weight of the beverage, is in particular in the range of 0,001 to 0,10 wt.-%, preferably in the range of 0,004 to 0,07 wt.-%, and more preferably in the range of 0,006 to 0,05 wt.-%, or the amount of saccharin, in particular sodium saccharin, in the beverage, based on the total weight of the beverage, is in the range of 0,0001 to 0,02 wt.-%, preferably in the range of 0,0005 to 0,01 wt.-%, and more preferably in the range of 0,001 to 0,008 wt.-%, or the amount of cyclamate, in particular sodium cyclamate, in the beverage, based on the total weight of the beverage, is in the range of 0,001 to 0,1 wt.-%, preferably in the range of 0,004 to 0,07 wt.-%, and more preferably in the range of 0,006 to 0,05 wt.-%, or the amount of acesulfame, in particular acesulfame potassium, in the beverage, based on the total weight of the beverage, is in the range of 0,001 to 0,10 wt.-%, preferably in the range of 0,004 to 0,07 wt.-%, and more preferably in the range of 0,006 to 0,05 wt.-%, or the amount of erythritol in the beverage, based on the total weight of the beverage, is in the range of 0 to 10,0 wt.-%, preferably in the range of 0,5 to 5,0 wt.-%, and more preferably in the range of 1,0 to 3,0 wt.-%.

In the beverages of the present invention which contain sucralose, saccharin, in particular sodium saccharin, and cyclamate, in particular sodium cyclamate, the amount of sucralose in the beverage, based on the total weight of the beverage, is in particular in the range of 0,001 to 0,10 wt.-%, preferably in the range of 0,004 to 0,07 wt.-%, and more preferably in the range of 0,006 to 0,05 wt.-%, the amount of saccharin, in particular sodium saccharin, in the beverage, based on the total weight of the beverage, is in the range of 0,0001 to 0,02 wt.-%, preferably in the range of 0,0005 to 0,01 wt.-%, and more preferably in the range of 0,001 to 0,008 wt.-%, and the amount of cyclamate, in particular sodium cyclamate, in the beverage, based on the total weight of the beverage, is in the range of 0,001 to 0,10 wt.-%, preferably in the range of 0,004 to 0,07 wt.-%, and more preferably in the range of 0,006 to 0,05 wt.-%.

In the beverages of the present invention which contain sucralose, saccharin, in particular sodium saccharin, cyclamate, in particular sodium cyclamate, and erythritol the amount of sucralose in the beverage, based on the total weight of the beverage, is in particular in the range of 0,001 to 0,10 wt.-%, preferably in the range of 0,004 to 0,07 wt.-%, and more preferably in the range of 0,006 to 0,05 wt.-%, the amount of saccharin, in particular sodium saccharin, in the beverage, based on the total weight of the beverage, is in the range of 0,0001 to 0,02 wt.-%, preferably in the range of 0,0005 to 0,01 wt.-%, and more preferably in the range of 0,001 to 0,008 wt.-%, the amount of cyclamate, in particular sodium cyclamate, in the beverage, based on the total weight of the beverage, is in the range of 0,001 to 0,10 wt.-%, preferably in the range of 0,004 to 0,07 wt.-%, and more preferably in the range of 0,006 to 0,05 wt.-%, and the amount of erythritol in the beverage, based on the total weight of the beverage, is in the range of 0 to 10,0 wt.-%, preferably in the range of 0,5 to 5,0 wt.-%, and more preferably in the range of 1,0 to 3,0 wt.-%.

In the beverages of the present invention which contain sucralose, saccharin, in particular sodium saccharin, cyclamate, in particular sodium cyclamate, and acesulfame, in particular acesulfame potassium, the amount of sucralose in the beverage, based on the total weight of the beverage, is in particular in the range of 0,001 to 0,10 wt.-%, preferably in the range of 0,004 to 0,07 wt.-%, and more preferably in the range of 0,006 to 0,05 wt.-%, the amount of saccharin, in particular sodium saccharin, in the beverage, based on the total weight of the beverage, is in the range of 0,0001 to 0,02 wt.-%, preferably in the range of 0,0005 to 0,01 wt.-%, and more preferably in the range of 0,001 to 0,008 wt.-%, the amount of cyclamate, in particular sodium cyclamate, in the beverage, based on the total weight of the beverage, is in the range of 0,001 to 0,1 wt.-%, preferably in the range of 0,004 to 0,07 wt.-%, and more preferably in the range of 0,006 to 0,05 wt.-%, and the amount of acesulfame, in particular acesulfame potassium, in the beverage, based on the total weight of the beverage, is in the range of 0,001 to 0,10 wt.-%, preferably in the range of 0,004 to 0,07 wt.-%, and more preferably in the range of 0,006 to 0,05 wt.-%.

In the beverages of the present invention which contain sucralose, saccharin, in particular sodium saccharin, cyclamate, in particular sodium cyclamate, acesulfame, in particular acesulfame potassium, and erythritol, the amount of sucralose in the beverage, based on the total weight of the beverage, is in particular in the range of 0,001 to 0,10 wt.-%, preferably in the range of 0,004 to 0,07 wt.-%, and more preferably in the range of 0,006 to 0,05 wt.-%, the amount of saccharin, in particular sodium saccharin, in the beverage, based on the total weight of the beverage, is in the range of 0,0001 to 0,02 wt.-%, preferably in the range of 0,0005 to 0,01 wt.-%, and more preferably in the range of 0,001 to 0,008 wt.-%, the amount of cyclamate, in particular sodium cyclamate, in the beverage, based on the total weight of the beverage, is in the range of 0,001 to 0,1 wt.-%, preferably in the range of 0,004 to 0,07 wt.-%, and more preferably in the range of 0,006 to 0,05 wt.-%, the amount of acesulfame, in particular acesulfame potassium, in the beverage, based on the total weight of the beverage, is in the range of 0,001 to 0,10 wt.-%, preferably in the range of 0,004 to 0,07 wt.-%, and more preferably in the range of 0,006 to 0,05 wt.-%, and the amount of erythritol in the beverage, based on the total weight of the beverage, is in the range of 0 to 10,0 wt.-%, preferably in the range of 0,5 to 5,0 wt.-%, and more preferably in the range of 1,0 to 3,0 wt.-%.

The aforementioned ranges for beverages containing sucralose, saccharin, in particular sodium saccharin, and cyclamate, in particular sodium cyclamate, or sucralose, saccharin, in particular sodium saccharin, cyclamate, in particular sodium cyclamate, and acesulfame, in particular acesulfame potassium, are also applicable for beverages which do not contain any other high potency sweetener than those explicitly specified.

Those beverages of the present invention are also preferred in terms of arriving at a less intensive sweet aftertaste and an improved general sensory profile, in particular in energy drinks and carbonated soft drinks, which contain sucralose, acesulfame, in particular acesulfame potassium, and mogroside V, or which contain sucralose, acesulfame, in particular acesulfame potassium, mogroside V, and erythritol.

In the beverages of the present invention as specified in the foregoing paragraph, the amount of sucralose in the beverage, based on the total weight of the beverage, is in the range of 0,001 to 0,10 wt.-%, preferably in the range of 0,004 to 0,07 wt.-%, and more preferably in the range of 0,006 to 0,05 wt.-%, or the amount of acesulfame, in particular acesulfame potassium, in the beverage, based on the total weight of the beverage, is in the range of 0,001 to 0,10 wt.-%, preferably in the range of 0,004 to 0,07 wt.-%, and more preferably in the range of 0,006 to 0,05 wt.-%, or the amount of mogroside V in the beverage, based on the total weight of the beverage, is in the range of 0,0015 to 0,10 wt.-%, preferably in the range of 0,004 to 0,07 wt.-%, and more preferably in the range of 0,006 to 0,05 wt.-%, or, if present in the beverage, the amount of erythritol in the beverage, based on the total weight of the beverage, is in the range of 0 to 10,0 wt.-%, preferably in the range of 0,5 to 5,0 wt.-%, and more preferably in the range of 1,0 to 3,0 wt.-%.

In the beverages of the present invention which contain sucralose, acesulfame, in particular acesulfame potassium, and mogroside V, the amount of sucralose in the beverage, based on the total weight of the beverage, is in the range of 0,001 to 0,10 wt.-%, preferably in the range of 0,004 to 0,07 wt.-%, and more preferably in the range of 0,006 to 0,05 wt.-%, the amount of acesulfame, in particular acesulfame potassium, in the beverage, based on the total weight of the beverage, is in the range of 0,001 to 0,10 wt.-%, preferably in the range of 0,004 to 0,07 wt.-%, and more preferably in the range of 0,006 to 0,05 wt.-%, and the amount of mogroside V in the beverage, based on the total weight of the beverage, is in the range of 0,0015 to 0,10 wt.-%, preferably in the range of 0,004 to 0,07 wt.-%, and more preferably in the range of 0,006 to 0,05 wt.-%.

In the beverages of the present invention which contain sucralose, acesulfame, in particular acesulfame potassium, mogroside V, and erythritol the amount of sucralose in the beverage, based on the total weight of the beverage, is in the range of 0,001 to 0,10 wt.-%, preferably in the range of 0,004 to 0,07 wt.-%, and more preferably in the range of 0,006 to 0,05 wt.-%, the amount of acesulfame, in particular acesulfame potassium, in the beverage, based on the total weight of the beverage, is in the range of 0,001 to 0,10 wt.-%, preferably in the range of 0,004 to 0,07 wt.-%, and more preferably in the range of 0,006 to 0,05 wt.-%, the amount of mogroside V in the beverage, based on the total weight of the beverage, is in the range of 0,0015 to 0,10 wt.-%, preferably in the range of 0,004 to 0,07 wt.-%, and more preferably in the range of 0,006 to 0,05 wt.-%, or, if present in the beverage, and the amount of erythritol in the beverage, based on the total weight of the beverage, is in the range of 0 to 10,0 wt.-%, preferably in the range of 0,5 to 5,0 wt.-%, and more preferably in the range of 1,0 to 3,0 wt.-%.

The aforementioned ranges for beverages containing sucralose, acesulfame, in particular acesulfame potassium, and mogroside V, or containing sucralose, acesulfame, in particular acesulfame potassium, mogroside V, and erythritol are also applicable for beverages which do not contain any other high potency sweetener.

Mogroside V is the main component of the Siraitia grosvenorii fruit, also known as monk's fruit, luohan guo, or Swingle fruit. Mogroside V can be used with the beverages of the present invention as such, i.e. in neat form, but can also be added to the beverages as part of an extract of the Siraitia grosvenorii fruit.

Those beverages of the present invention are also preferred in terms of arriving at a less intensive sweet aftertaste and an improved general sensory profile, in particular in energy drinks and carbonated soft drinks, which contain sucralose and erythritol.

In the beverages of the present invention as specified in the foregoing paragraph, the amount of sucralose in the beverage, based on the total weight of the beverage, is in the range of 0,010 to 0,050 wt.-%, preferably in the range of 0,015 to 0,040 wt.-%, and more preferably in the range of 0,020 to 0,030 wt.-%, and the amount of erythritol in the beverage, based on the total weight of the beverage, is in the range of 0 to 10,0 wt.-%, preferably in the range of 0,5 to 5,0 wt.-%, and more preferably in the range of 1,0 to 3,0 wt.-%.

The aforementioned ranges for beverages containing sucralose and erythritol are also applicable for beverages which do not contain any other high potency sweetener.

The components that form the beverages of the invention add up in each case to exactly 100 wt.-%.

Beverage the beverage of the present invention can be a carbonated beverage, in particular a soft drink or an energy drink.

With the present invention it has the surprisingly been found that by using lactic acid and malic acid in combination in a beverage or by using in particular lactic acid, malic acid and citric acid in combination in a beverage in each case containing at least one high potency sweetener, in particular two or more high potency sweeteners, in particular in a beverage according to the present invention, the sweet aftertaste or the lingering effect of said high potency sweeteners can be reduced or masked, or in some cases even be eliminated.

With the present invention it has also surprisingly been found that by using lactic acid and malic acid in combination in a beverage or by using in particular lactic acid, malic acid and citric acid in combination in a beverage in each case containing at least one high potency sweetener, in particular two or more high potency sweeteners, in particular in a beverage according to the present invention, the sensory profile of said beverage containing high potency sweeteners can be improved.

With the present invention it has also surprisingly been found that by using lactic acid and malic acid in combination in a beverage or by using in particular lactic acid, malic acid and citric acid in combination in a beverage in each case containing at least one high potency sweetener, in particular two or more high potency sweeteners, and at least one flavour compound, in particular in a beverage according to the present invention, the flavour impression of said flavour compound can be enhanced or prolonged. Surprisingly, by using lactic acid and malic acid in combination in a beverage or by using in particular lactic acid, malic acid and citric acid in combination as specified in in this paragraph the flavour impression of the flavour compound can be both enhanced and prolonged.

The use of lactic acid and malic acid in combination in a beverage or in particular of lactic acid, malic acid and citric acid in combination in a beverage as specified in the foregoing paragraphs furnishes particularly reliable and reproducible results by making use of a weight ratio of lactic acid to malic acid in the range of (5,0 - 20,0) : 1,0, preferably in the range of (7,5 - 15,0) : 1,0, for a combination of lactic acid and malic acid, and by making use of a weight ratio of lactic acid to malic acid to citric acid in the range of (5,0 - 20,0) : 1,0 : (5,0 - 20,0), preferably in the range of (7,5 - 15,0) : 1,0 : (5,0 - 20,0), for a combination of lactic acid, malic acid and citric acid.

In those preferred embodiments of the beverages of the present invention in which no high potency sweeteners other than those specified for component a) are present, rubusoside may be optionally present as an exception.

In a highly preferred embodiment, the beverages of the present invention do not contain any natural sweet-tasting monosaccharides and do also not contain any natural sweet tasting disaccharides. Sweet-tasting natural monosaccharides encompass for example fructose, glucose, mannose, rhamnose, xylose, tagatose, and galactose, and sweet-tasting natural disaccharides encompass for example sucrose, lactose and maltose or mixtures thereof. In another preferred embodiment the beverages of the present invention in addition do also not contain any sweet-tasting sugar alcohols (HOCH₂(CHOH)ₙCH₂OH, e.g. with n = 2 to 12), with the exception of erythritol which is in some preferred embodiments of the present invention, as outlined in the foregoing, present therein.

Furthermore, the beverage of the present invention can also contain at least one thickening agent selected from the group consisting of starch, starch-based thickeners, xanthan, pectin, gum arabic, agar agar, carrageenan, alginic acid and locust bean gum or mixtures thereof and/or, in particular and, one or more additives selected from the group consisting of vitamins, couleur agents, caffeine, taurine and mixtures thereof.

The pH value of the beverages of the present invention is usually in the range from about 2.0 to about 5.0, in particular in the range from about 2,5 to 4,0.

With the present invention low- or non-calorie beverages have surprisingly been found which although containing high potency sweeteners exhibit a much improved sweetness and aroma profile, and which in particular have a less intensive sweetness aftertaste thereby arriving at a sensory profile similar to beverages which have been sweetened with sucrose. In other words, with the beverages of the present invention the sweet aftertaste or lingering effect of high potency sweeteners is reduced or masked. Furthermore, with the present invention beverages have become accessible in which although containing high potency sweeteners allow a flavour compound to exhibit an enhanced and prolonged flavour impression.

Although modifications and changes maybe suggested by those skilled in the art, it is the intention of the applicant to embody within the patent warranted hereon all changes and modifications as reasonably and probably come within the scope of this contribution to the art. The features of the present invention which are believed to be novel are set forth in detail in the appended claims. The features disclosed in the description and in the claims could be essential alone or in every combination for the realization of the invention in its different embodiments.

## Claims

1. Beverage, in particular carbonated beverage, such as an energy drink, containing
a) sucralose as high potency sweetener,
b) water,
c) malic acid, in particular in the amount in the range of 0,001 to 0,2 wt.-%, preferably 0,005 to 0,15 wt.-%, more preferably 0,01 to 0,1 wt.-% and more in particular 0,015 to 0,05 wt.-%, based on the total weight of the beverage in each case, and
d) lactic acid, in particular in the amount in the range of 0,05 to 0,6 wt.-%,
preferably 0,1 to 0,5 wt.-%, more preferably 0,15 to 0,4 wt.-% and more in particular 0,2 to 0,3 wt.-%, based on the total weight of the beverage in each case.

2. Beverage according to claim 1, further comprising
saccharin, in particular sodium saccharin, and cyclamate, in particular sodium cyclamate, as high potency sweeteners a).

3. Beverage according to claim 1, further comprising
mogroside V as high potency sweetener a).

4. Beverage according to any of claims 1 to 3, in particular according to claim 2 or 3, further comprising
acesulfame, in particular acesulfame potassium, as high potency sweetener a).

5. Beverage, in particular carbonated beverage, such as an energy drink, containing
a) one or more high potency sweeteners,
b) water, and
c) 0,001 to 0,2 wt.-%, preferably 0,005 to 0,15 wt.-%, more preferably 0,01 to 0,1 wt.-% and in particular 0,015 to 0,05 wt.-%, malic acid, based on the total weight of the beverage in each case, and/or, in particular and,
d) 0,05 to 0,6 wt.-%, preferably 0,1 to 0,5 wt.-%, more preferably 0,15 to 0,4 wt.-% and in particular 0,2 to 0,3 wt.-%, lactic acid, based on the total weight of the beverage in each case.

6. Beverage according to any of the preceding claims, further comprising
e) at least one flavour compound.

7. Beverage according to any of the preceding claims, further comprising
f) citric acid.

8. Beverage according to any of the preceding claims, further comprising
g) erythritol.

9. Beverage according to claim 7 or 8, wherein
citric acid is present in the beverage in the amount in the range of 0,05 to 0,8 wt.-%, preferably 0,1 to 0,6 wt.-%, more preferably 0,15 to 0,4 wt.-% and in particular 0,20 to 0,3 wt.-%, based on the total weight of the beverage in each case.

10. Beverage according to claim 8 or 9, wherein
erythritol is present in the beverage in the amount, based on the total weight of the beverage, in the range of 0,5 to 3,5 wt.-%, preferably in the range of 1,0 to 2,0 wt.-%.

11. Beverage according to any of the preceding claims, wherein
the amount of malic acid in the beverage, based on the combined weight of malic acid and lactic acid, is in the range of 2,0 to 15,0 wt.-%, preferably in the range of 4,0 to 12,0 wt.-%, more preferably in the range of 5,0 to 10,0 wt.-% and in particular in the range of 6,0 to 9,0 wt.-%, and/or, in particular and, wherein
the amount of lactic acid in the beverage, based on the combined weight of malic acid and lactic acid, is in the range of 85,0 to 98,0 wt.-%, preferably in the range of 88,0 to 96,0 wt.-%, more preferably in the range of 90,0 to 95,0 wt.-% and in particular in the range of 91,0 to 94,0 wt.-%.

12. Beverage according to any of claims 7 to 11, wherein
the amount of malic acid in the beverage, based on the combined weight of malic acid, lactic acid and citric acid, is in the range of 1,0 to 10,0 wt.-%, preferably in the range of 2,0 to 8,0 wt.-%, more preferably in the range of 2,5 to 6,0 wt.-%, and in particular in the range of 3,0 to 5,0 wt.-%,
the amount of lactic acid in the beverage, based on the combined weight of malic acid, lactic acid and citric acid, is in the range of 45,0 to 49,5 wt.-%, preferably in the range of 46,0 to 49,0 wt.-%, more preferably in the range of 47,0 to 48,7 wt.-% and in particular in the range of 47,5 to 48,5 wt.-%, and
the amount of citric acid in the beverage, based on the combined weight of malic acid, lactic acid and citric acid, is in the range of 45,0 to 49,5 wt.-%, preferably in the range of 46,0 to 49,0 wt.-%, more preferably in the range of 47,0 to 48,7 wt.-% and in particular in the range of 47,5 to 48,5 wt.-%.

13. Beverage according to any of the preceding claims, further containing rubusosides, in particular in an amount in the range of 0,0001 to 0,02 wt.-%, preferably in the range of 0,0005 to 0,01 wt.-%, more preferably in the range of 0,001 to 0,007 wt.-%, and in particular in the range of 0,0015 to 0,005 wt.-%, based on the total weight of the beverage in each case.

14. Beverage according to any of claims 5 to 13, wherein
the high potency sweeteners (component a)) are selected from the group consisting of natural high potency sweeteners, artificial high potency sweeteners and a mixture thereof.

15. Beverage according to claim 14, wherein
the natural high potency sweeteners are selected from the group consisting of Monk's Fruit extract, Lo Han Guo extract, Stevia extracts, in particular Stevia leaf extracts, steviol glycosides, rebaudiosides, steviosides, enzymatically produced steviol glycosides, glucosylated steviol glycosides, mogroside V, mogroside IV, monatin, glycyrrhizin, thaumatin, brazzein, monellin and mixtures thereof, or wherein
the artificial high potency sweeteners are selected from the group consisting of sucralose, saccharin, in particular sodium saccharin, cyclamate, in particular sodium cyclamate, acesulfame, in particular acesulfame potassium, advantame, aspartame, neotame, neohesperidine and mixtures thereof.

16. Beverage according to any of claims 5 to 15, containing
sucralose, saccharin, in particular sodium saccharin, and cyclamate, in particular sodium cyclamate, or
containing
sucralose, saccharin, in particular sodium saccharin, cyclamate, in particular sodium cyclamate, and acesulfame, in particular acesulfame potassium, or
containing
sucralose, saccharin, in particular sodium saccharin, cyclamate, in particular sodium cyclamate, and erythritol, or
containing
sucralose, saccharin, in particular sodium saccharin, cyclamate, in particular sodium cyclamate, acesulfame, in particular acesulfame potassium, and erythritol.

17. Beverage according to claim 16, wherein
the amount of sucralose in the beverage, based on the total weight of the beverage, is in the range of 0,001 to 0,1 wt.-%, preferably in the range of 0,004 to 0,07 wt.-%, and more preferably in the range of 0,006 to 0,05 wt.-%, or
the amount of saccharin, in particular sodium saccharin, in the beverage, based on the total weight of the beverage, is in the range of 0,0001 to 0,02 wt.-%, preferably in the range of 0,0005 to 0,01 wt.-%, and more preferably in the range of 0,001 to 0,008 wt.-%, or
the amount of cyclamate, in particular sodium cyclamate, in the beverage, based on the total weight of the beverage, is in the range of 0,001 to 0,1 wt.-%, preferably in the range of 0,004 to 0,07 wt.-%, and more preferably in the range of 0,006 to 0,05 wt.-%, or
the amount of acesulfame, in particular acesulfame potassium, in the beverage, based on the total weight of the beverage, is in the range of 0,001 to 0,1 wt.-%, preferably in the range of 0,004 to 0,07 wt.-%, and more preferably in the range of 0,006 to 0,05 wt.-%, or
the amount of erythritol in the beverage, based on the total weight of the beverage, is in the range of 0 to 10,0 wt.-%, preferably in the range of 0,5 to 5,0 wt.-%, and more preferably in the range of 1,0 to 3,0 wt.-%.

18. Beverage according to any of claims 5 to 15, containing
sucralose, acesulfame, in particular acesulfame potassium, and mogroside V, or
containing
sucralose, acesulfame, in particular acesulfame potassium, mogroside V, and
erythritol.

19. Beverage according to claim 18, wherein
the amount of sucralose in the beverage, based on the total weight of the beverage, is in the range of 0,001 to 0,1 wt.-%, preferably in the range of 0,004 to 0,07 wt.-%, and more preferably in the range of 0,006 to 0,05 wt.-%, and
the amount of acesulfame, in particular acesulfame potassium, in the beverage, based on the total weight of the beverage, is in the range of 0,001 to 0,1 wt.-%, preferably in the range of 0,004 to 0,07 wt.-%, and more preferably in the range of 0,006 to 0,05 wt.-%, and
the amount of mogroside V in the beverage, based on the total weight of the beverage, is in the range of 0,0015 to 0,1 wt.-%, preferably in the range of 0,004 to 0,07 wt.-%, and more preferably in the range of 0,006 to 0,05 wt.-%, and
the amount of erythritol in the beverage, based on the total weight of the beverage, is in the range of 0 to 10,0 wt.-%, preferably in the range of 0,5 to 5,0 wt.-%, and more preferably in the range of 1,0 to 3,0 wt.-%.

20. Beverage according to any of claims 5 to 15, containing sucralose and erythritol.

21. Beverage according to claim 20, wherein
the amount of sucralose in the beverage, based on the total weight of the beverage, is in the range of 0,010 to 0,050 wt.-%, preferably in the range of 0,015 to 0,040 wt.-%, and more preferably in the range of 0,020 to 0,030 wt.-%, and
the amount of erythritol in the beverage, based on the total weight of the beverage, is in the range of 0 to 10,0 wt.-%, preferably in the range of 0,5 to 5,0 wt.-%, and
more preferably in the range of 1,0 to 3,0 wt.-%.

22. Beverage according to any of the preceding claims, wherein
it does not contain any other high potency sweetener than those specified under component a).

23. Beverage according to any of the preceding claims, wherein
it does not contain any natural sweet-tasting monosaccharides and disaccharides and/or, in particular and, it does not contain any other acid than malic acid and lactic acid or preferably it does not contain any other acid than malic acid, lactic acid and citric acid.

24. Use of lactic acid and malic acid and preferably also citric acid in a beverage, in particular in a carbonated beverage, containing at least one, in particular more than one, preferably two, three or four, high potency sweetener, in particular in a beverage according to any of the preceding claims, for reducing or masking the sweet aftertaste or the lingering effect of said high potency sweeteners or for improving the sensory profile of said beverage containing high potency sweeteners.

25. Use of lactic acid and malic acid and preferably also citric acid in a beverage, in particular in a carbonated beverage, containing at least one, in particular more than one, preferably two, three or four, high potency sweetener and at least one flavour compound, in particular in a beverage according to any of claims 6 to 23, for enhancing and/or prolonging the flavour impression of said flavour compound.

26. Use according to claim 24 or 25, wherein
the weight ratio of lactic acid to malic acid is in the range of (5,0 - 20,0) : 1,0, preferably in the range of (7,5 - 15,0) : 1,0, or
wherein the weight ratio of lactic acid to malic acid to citric acid is in the range of (5,0 - 20,0) : 1,0 : (5,0 - 20,0), preferably in the range of (7,5 - 15,0) : 1,0 : (5,0 - 20,0).
